# FASCICULE DE BREVET EUROPEEN

(11) **EP 3 375 143 B1**
(45) Date de publication et mention de la délivrance du brevet: **04.11.2020**
(21) Numéro de dépôt: 16809962.0
(22) Date de dépôt: 04.11.2016
(51) Int. Cl.: H04L 12/26, H04L 12/24

(54) **ANALYSE ASYNCHRONE D'UN FLUX DE DONNÉES**
ASYNCHRONE ANALYSE EINES DATENSTROMS
ASYNCHRONOUS ANALYSIS OF A DATA STREAM

(30) Priorité: 12.11.2015 FR 1560784
(43) Date de publication de la demande: 19.09.2018
(73) Titulaire: Qosmos Tech, 75017 Paris (FR)
(72) Inventeur: TOLLET, Jérôme, 75003 Paris (FR)
(74) Mandataire: Plasseraud IP
(86) Numéro de dépôt international: PCT/FR2016/052858
(87) Numéro de publication internationale: WO 2017/081389

(56) Documents cités:
- US-A1- 2007 053 382

## Description

La présente invention concerne le traitement de données dans des réseaux de télécommunications, et notamment l'analyse de flux transitant vers/depuis un client.

Elle concerne plus précisément des applications de surveillance et de filtrage de flux de données, par exemple des flux internet.

Dans la suite, on entend par flux de données tout ensemble de données échangées entre un client et une entité, c'est-à-dire entre un client et un serveur, ou entre deux clients (flux dits pair à pair, ou P2P), par exemple sur un réseau de type Internet.

Il est connu d'appliquer différentes méthodes de classification de flux de données afin de détecter un format de données, ou un protocole employé pour leur transport, en vue de filtrer les flux de données, de catégoriser un flux afin de permettre la mise en place d'une qualité de service QoS dans le réseau, ou plus généralement de traiter un flux de données.

A cet effet, des analyseurs de flux peuvent être disposés en interception dans des points d'accès réseau, tels que des bornes Wi-fi par exemple, situés dans des lieux publics tels qu'un hôpital ou un campus universitaire par exemple. En effet, dans un hôpital ou dans un campus universitaire, il peut être souhaitable d'empêcher les flux de données P2P, et il est ainsi nécessaire de détecter de tels flux de données.

De tels analyseurs de flux de données interceptent des paquets du flux de données et les paquets sont traités pour procéder à la classification du flux.

Des algorithmes statistiques et des algorithmes déterministes (aussi appelés DPI, pour « *Deep Packet Inspection* » en anglais) sont bien connus et permettent, à partir des paquets de données interceptés, de déterminer le format des données échangés ou le protocole utilisé pour leur transport, ou plus généralement de ranger le flux de données dans une catégorie, afin de déduire si le flux de données est un flux autorisé ou non en fonction de la catégorie qui lui est attribuée ou si une QoS spécifique doit être appliquée pour ce flux.

Toutefois, l'analyse des paquets d'un flux de données introduit un délai lorsque l'analyseur de flux est en interception dans le réseau de télécommunications : chaque paquet reçu par l'analyseur est traité et retenu pendant le traitement appliqué par l'analyseur.

L'analyse d'un paquet peut permettre de catégoriser le flux correspondant au paquet traité. Dans ce cas, le paquet est retenu si le flux est interdit, est transféré si le flux est autorisé, ou une politique de QoS est appliquée au flux correspondant au paquet. Dans le cas où l'analyse du paquet n'est pas suffisante pour catégoriser le flux, le paquet est transféré à l'issue de l'analyse.

Ainsi, chaque paquet de données est retenu durant son analyse ce qui introduit de la latence dans le réseau. De plus, les durées d'analyse étant variables (de quelques millisecondes à quelques dixièmes de seconde), la latence n'est aucunement garantie pour le client, ce qui n'est pas satisfaisant.

Des exemples de l'art antérieur peuvent être trouvés dans le document US2007/053382.

Ainsi, il existe un besoin d'analyser les flux de données d'un client efficacement tout en garantissant une latence minimale au client.

La présente invention vient améliorer la situation.

Elle propose à cet effet un procédé de traitement d'un flux de données échangé entre un client et une entité via un réseau de télécommunications, le flux de données comprenant un ensemble de paquets de données, le procédé de traitement étant celui de la revendication 1.

Un deuxième aspect de l'invention concerne un produit programme informatique comportant des instructions pour la mise en œuvre du procédé selon le premier aspect de l'invention, lorsque ce programme est exécuté par un processeur.

Un troisième aspect de l'invention concerne un dispositif de traitement d'un flux de données échangé entre un client et une entité via un réseau de télécommunications, le flux de données comprenant un ensemble de paquets de données, le dispositif de traitement étant revendiqué dans la revendication 6.

Un quatrième aspect de l'invention concerne un système de traitement de flux de données comprenant un dispositif de traitement selon le troisième aspect de l'invention et un analyseur de flux apte à, à partir d'un ou plusieurs paquets de données d'un flux de données, obtenir un résultat d'analyse du flux de données. Des modes de réalisation particulièrement avantageux sont revendiqués dans les revendications dépendantes.

D'autres caractéristiques et avantages de l'invention apparaîtront à l'examen de la description détaillée ci-après, et des dessins annexés sur lesquels:
- la figure 1 illustre une architecture générale d'un système selon un mode de réalisation de l'invention;
- la figure 2 est un diagramme présentant les étapes d'un procédé de traitement selon un mode de réalisation de l'invention ;
- la figure 3 est une courbe illustrant les durées d'analyse de différents flux de données ;
- la figure 4 illustre la structure d'un dispositif de traitement de données selon un mode de réalisation de l'invention.

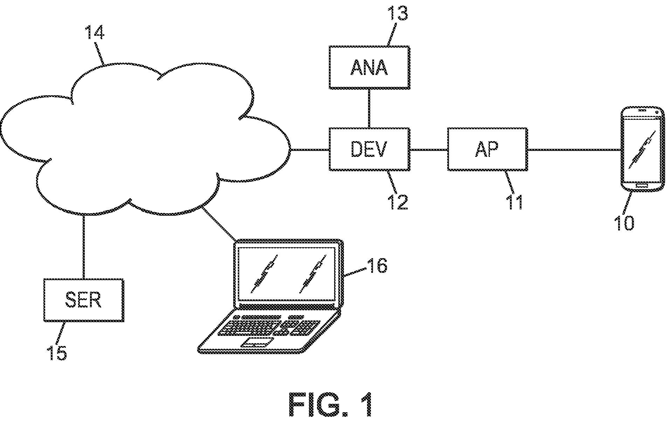

La figure 1 illustre un système selon un mode de réalisation de l'invention.

Le système comprend un terminal utilisateur 10, appelé « client » par la suite, tel qu'un ordinateur portable ou de bureau, une tablette tactile, un Smartphone ou encore tout dispositif électronique comprenant une interface permettant de communiquer avec un point d'accès 11 à un réseau de télécommunications 14, tel que le réseau Internet par exemple.

Aucune restriction n'est attachée au point d'accès 11 qui peut être un point d'accès sans fil, de type Wi-fi par exemple, ou une liaison filaire (ADSL ou fibre par exemple).

Par exemple, dans ce qui suit, le point d'accès 11 est considéré comme étant une borne Wi-fi d'un campus universitaire. Comme discuté en introduction, il peut être souhaité l'interdiction de flux de données P2P pour les utilisateurs accédant à un réseau internet via un point d'accès d'un campus universitaire.

Via le réseau de télécommunications 14, le client 10 peut communiquer avec un serveur distant 15 afin de requérir des contenus multimédias, par exemple, ou plus simplement de requérir le chargement d'une page Internet, ou encore d'échanger des fichiers (en voie montante et/ou en voie descendante) avec un autre client 16 via un protocole de communication pair à pair. L'invention prévoit également que le client 10 puisse procéder au téléversement (« upload » en anglais) d'un contenu multimédia sur le serveur 15.

La manière dont la communication est établie, les requêtes et réponses sont routées, est bien connue en soi et n'est pas présentée plus en détails dans ce qui suit.

Lorsque la communication est établie entre le client 10 et le serveur 15 ou le client 16, un flux de données est échangé via le réseau de télécommunications 14. Ce flux de données peut mettre en œuvre un échange de paquets de données, tels que des paquets TCP (pour « *Transport Contral Protocol* » en anglais) par exemple, lorsque ce protocole de transport est employé. Aucune restriction n'est cependant attachée à la couche de protocoles employée pour la communication du flux de données.

Un tel flux de données peut être observé et intercepté par un dispositif de traitement 12 selon un mode de réalisation de l'invention, pouvant être situé en amont ou en aval du point d'accès 11, ou pouvant être intégré dans le point d'accès 11. Par exemple, le campus universitaire de l'exemple considéré ci-dessus peut être équipé d'un unique dispositif de traitement 12.

Le dispositif de traitement 12 peut être relié à un analyseur de flux 13 en charge d'analyser les paquets d'un flux de données en vue de catégoriser ce flux de données. En variante, l'analyseur de flux 13 peut être intégré dans le dispositif de traitement 12. L'analyseur de flux 13 et le dispositif de traitement 12 peuvent, selon certains modes de réalisation, partager une même mémoire.

Un tel analyseur de flux 13 est bien connu en soi et sort du cadre de l'invention. On pourra par exemple se référer au système d'analyse de trafic de la demande de brevet publiée sous le numéro EP1722509.

En tout état de cause, l'analyseur de flux 12 est apte à renvoyer au dispositif de traitement 12 un résultat d'analyse exploitable pour traiter le flux de données. Par exemple, le résultat d'analyse peut permettre une catégorisation du flux de données, par exemple, entre un groupe de flux de données P2P, et un groupe de flux de données non P2P. Ainsi, dans le cas où le dispositif de traitement 12 est dédié au filtrage, il peut interdire les flux catégorisés comme étant P2P et autoriser les flux catégorisés comme étant non P2P. En variante, la catégorisation des flux peut être utilisée par l'unité de traitement 12 pour appliquer des politiques de QoS différenciées.

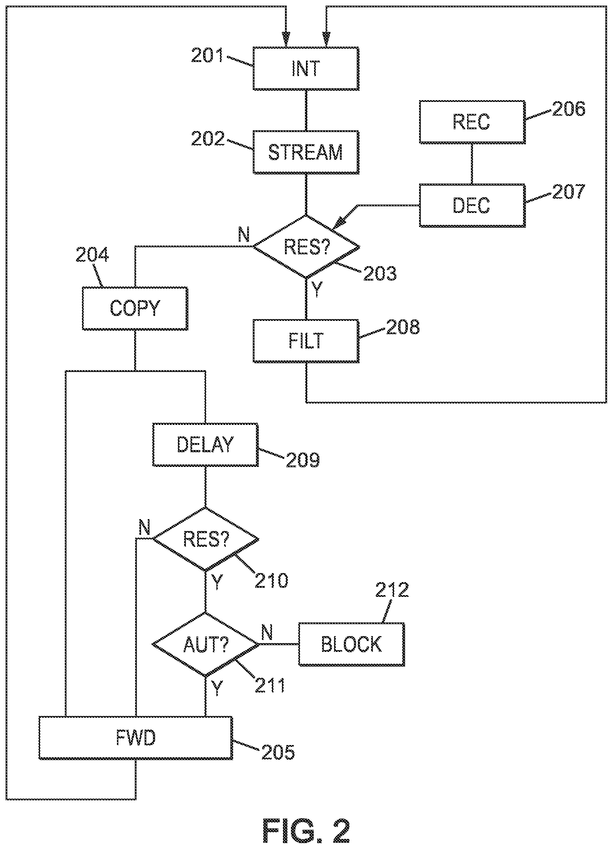

La figure 2 est un diagramme illustrant les étapes d'un procédé de traitement d'un flux de données selon un mode de réalisation de l'invention. Le procédé de traitement de flux peut être mis en œuvre par le dispositif de traitement 12 représenté sur la figure 1.

Dans ce qui suit, l'exemple du filtrage de flux de données est considéré, de manière illustrative. Les flux de données peuvent alors être autorisés ou interdits par le dispositif de traitement 12. Toutefois, comme détaillé ci-dessus, l'invention s'applique également à l'application de politiques de QoS à des flux de données, et plus généralement à tout traitement de flux de données.

A une étape 201, un paquet de données est intercepté par le dispositif d'analyse 12. Comme précédemment expliqué, le paquet de données peut être émis depuis le client 10 ou peut être destiné au client 10.

A une étape 202, un flux de données auquel correspond le paquet de données est identifié. Aucune restriction n'est attachée à la manière d'identifier un flux. Un identifiant de flux peut par exemple comprendre un identifiant de la source et un identifiant du destinataire. Le client 10 est soit la source soit le destinataire du flux identifié.

A une étape 203, il est vérifié si le flux identifié a été préalablement catégorisé dans le dispositif de traitement 12 en tant que flux autorisé ou flux interdit.

Si aucune catégorisation du flux n'a été préalablement effectuée, le paquet de données est copié à une étape 204. Une copie du paquet de données est ainsi obtenue et est transmise à l'analyseur de flux 13. En variante, dans le cas où l'analyseur de flux 13 et le dispositif de traitement 12 partagent une mémoire commune, l'étape 204 consiste à générer une référence au paquet de données.

Le paquet de données est ensuite transmis à une étape 205 au destinataire du flux (le client 10 lorsqu'il est destinataire, le serveur 15 ou le client 16 lorsque le client 10 est la source). Dans le cas où une référence est générée en lieu et place d'une copie du paquet de données, le paquet de données est en outre conservé en mémoire jusqu'à l'achèvement de l'étape 206 détaillée ci-après.

Aucune restriction n'est attachée à l'ordre dans lequel le paquet de données et sa copie (ou sa référence) sont transférés, et l'agencement des étapes de la figure 2 est donné à titre illustratif.

Le fait de baser l'analyse du flux sur des copies de paquets de données ou sur des références permet de réduire la latence associée à l'analyse du flux puisque les paquets de données n'ont pas à être retenus dans l'unité de traitement 12 jusqu'à ce que le paquet soit analysé. La contrepartie est que des paquets de données appartenant potentiellement à un flux interdit sont transmis au destinataire. Toutefois, en pratique, laisser passer quelques paquets de données d'un flux interdit n'est pas dommageable, notamment dans le contexte où l'on cherche à interdire certains types de flux (tels que les flux P2P par exemple).

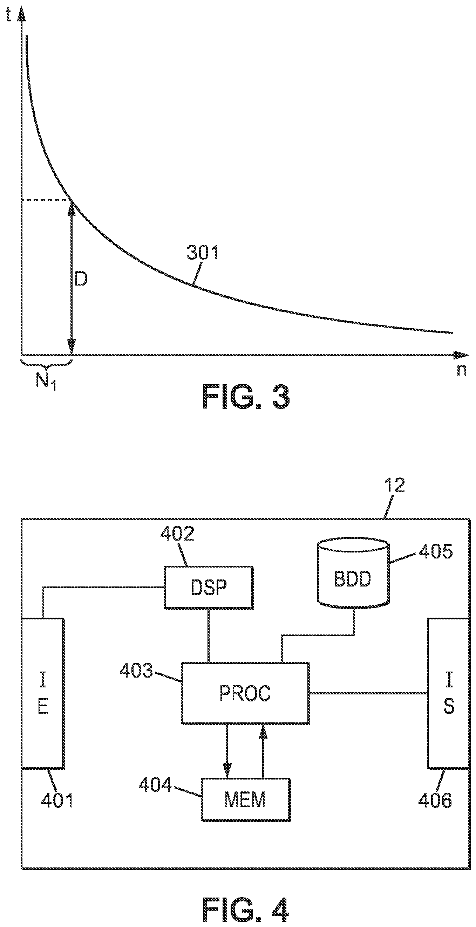

A une étape 206, lorsqu'une ou plusieurs copies ou références de paquets de données correspondant à un flux de données ont été transférées à l'analyseur de flux 13, un résultat de l'analyse est reçu de l'analyseur de flux 13 à une étape 206. La durée requise pour l'obtention d'un tel résultat ne peut être connue à l'avance et varie selon le flux de données à analyser. On peut représenter, comme sur la figure 3, la durée d'analyse d'un flux de données par la courbe 301.

En abscisse est représenté un indice d'un flux de données et en ordonnée est représentée la durée d'analyse de ce flux de données. La courbe 301 est obtenue après analyse d'un nombre N de flux de données, N étant de l'ordre de grandeur de plusieurs centaines ou plusieurs milliers. Les indices des flux de données sont classés de manière à ce que les durées d'analyse soient décroissantes. En pratique, la courbe 301 obtenue est de forme hyperbolique, c'est-à-dire que seul un nombre relativement faible de flux de données requièrent une analyse longue.

A une étape 207, sur réception d'un résultat d'analyse de l'analyseur de flux 13, l'unité de traitement 12 peut catégoriser le flux de données en vue d'autoriser ou d'interdire le flux de données. Le résultat de cette catégorisation peut être exploité à l'étape 203 sur réception d'un nouveau paquet de données correspondant au même flux de données.

L'unité de traitement 12 peut stocker un ensemble de règles prenant en entrée le résultat d'analyse et retournant une catégorisation du flux parmi un flux autorisé et un flux interdit. Dans l'exemple particulier décrit ci-avant, le résultat d'analyse peut indiquer si le flux de données est un flux P2P, et seuls les flux P2P sont catégorisés en tant que flux interdits par l'unité de traitement 12. La catégorisation du flux de données (ou marquage du flux de données) peut être stockée en association avec un identifiant du flux de données dans une base de données de l'unité de traitement 12. Comme précédemment expliqué, l'identifiant du flux de données peut comprendre un identifiant du destinataire (adresse IP, ou couple numéro de port/adresse IP par exemple) et un identifiant de la source.

Ainsi, lorsqu'il est déterminé à l'étape 203 que le flux de données correspondant au paquet de données reçu a été catégorisé, le procédé comprend le filtrage à une étape 208 du paquet de données sur la base de la catégorie attribuée au flux de données qui lui correspond :
- si le flux de données est autorisé, par exemple si le flux de données est établi entre le client 10 du campus universitaire et le serveur 15 (flux non-P2P), le paquet de données est directement transféré au destinataire ;
- si le flux de données est interdit, par exemple si le flux de données est établi entre le client 10 du campus universitaire et l'autre client 16 (flux P2P), le paquet de données est bloqué.

Comme précédemment expliqué, le paquet de données est transféré à une étape 205 au destinataire après avoir été copié à l'étape 204 (ou après avoir généré une référence). Selon un premier mode de réalisation, le paquet de données est immédiatement transféré à l'étape 205 après avoir été copié ou après avoir généré une référence (branche de gauche en sortie du bloc 204).

Selon un deuxième mode de réalisation, il peut être temporisé à une étape 209 durant une durée D prédéterminée après avoir copié le paquet de données, ou après avoir généré une référence, à l'étape 204 (branche de droite en sortie du bloc 204). A l'issue de la durée D, il est déterminé si un résultat d'analyse a été reçu, à une étape 210. Si tel n'est pas le cas, le paquet de données est transféré à l'étape 205 vers le destinataire du flux de données.

S'il est déterminé que le résultat d'analyse a été reçu à l'étape 210, il est vérifié à une étape 211 si le flux de données est catégorisé comme un flux autorisé. Si c'est le cas, le paquet de données est transféré à l'étape 205. Au contraire, si le flux de données est interdit, le paquet de données est bloqué à une étape 212.

Ainsi, selon le deuxième mode de réalisation, tous les paquets de données sont retardés d'une durée D tant qu'un résultat d'analyse n'a pas été reçu.

La durée D peut être avantageusement choisie à partir de la courbe 301 présentée sur la figure 3. Par exemple, D peut être la durée pour laquelle un résultat d'analyse peut être obtenu pour au moins k% des flux de données, par exemple 90%. D est ainsi calculé de manière à ce que le nombre N₁ illustré sur la figure 3 représente un dixième du nombre N totale de flux de données considérés.

Ceci permet d'assurer une latence fixe, de valeur relativement faible, tout en réduisant le risque de transférer un paquet de données appartenant à un flux interdit (puisque le résultat d'analyse aura été obtenu à l'issue de la durée D dans 90% des cas).

La figure 3 représente un dispositif de traitement 12 selon un mode de réalisation de l'invention.

Le dispositif de traitement 12 comprend une mémoire vive 404 et un processeur 403 pour stocker des instructions permettant la mise en œuvre des étapes du procédé décrit ci-avant en référence à la figure 2. Le dispositif de filtrage 12 comporte aussi une base de données 405 pour le stockage de données destinées à être conservées après l'application du procédé, notamment des données de marquage de flux de données, en flux de données autorisés ou flux de données interdits ou en flux de données différenciés par politiques de QoS à appliquer, mais également des règles permettant de déduire une catégorisation de flux à partir d'un résultat d'analyse. Le dispositif de traitement 12 comporte en outre une interface d'entrée 401 destinée à recevoir les paquets de données de flux de données échangés via le point d'accès 11, et à recevoir les résultats d'analyse de l'analyseur de flux 13. En variante, des interfaces d'entrées distinctes peuvent être prévues, l'une étant dédiées à l'interception des paquets de données échangés via le point d'accès, et l'autre étant dédiée à la réception des résultats d'analyse de l'analyseur de flux 13.

Le dispositif de traitement 12 comprend une interface de sortie 406 apte à transmettre d'une part des copies de paquets de données (ou des références aux paquets de données) à l'analyseur de flux 13 et d'autre part à transférer les paquets de données vers le client 10 ou vers le réseau 14. Tout comme pour l'interface d'entrée 401, des interfaces de sortie distinctes peuvent être prévues.

Bien entendu, la présente invention ne se limite pas à la forme de réalisation décrite ci-avant à titre d'exemple ; elle est définie par l'étendue des revendications.

## Revendications

1. Procédé de traitement d'un flux de données échangé entre un client (10) et une entité (15 ; 16) via un réseau de télécommunications (14), le flux de données comprenant un ensemble de paquets de données, le procédé de traitement comprenant les étapes suivantes :
- sur interception (201) d'un paquet de données appartenant à un flux de données, ledit flux de données comprenant une source et un destinataire, ledit client étant la source ou le destinataire du flux de données, copier (204) ledit paquet de données ou générer une référence audit paquet de données, et transférer (205) le paquet de données au destinataire;
- transmettre ladite copie ou référence à un analyseur de flux apte à analyser le flux de données;
- recevoir (206) un résultat d'analyse du flux de données depuis l'analyseur de flux ;
- traiter (207 ; 208) le flux de données sur la base du résultat d'analyse reçu ;
ledit procédé étant **caractérisé en ce qu'**il comprend en outre une étape de temporisation (209) d'une durée D prédéterminée suite à la copie du paquet de données ou à la génération de la référence, et dans lequel le paquet de données est transféré au destinataire à l'expiration de la temporisation, uniquement :
- si le résultat d'analyse de flux a été reçu de l'analyseur de flux et le flux de données est autorisé ; ou
- si le résultat d'analyse de flux n'a pas encore été reçu de l'analyseur de flux.

2. Procédé selon la revendication 1, dans lequel traiter le flux de données peut comprendre :
- appliquer une politique de qualité de service dépendant du résultat d'analyse reçu ; ou
- autoriser ou interdire le flux de données sur la base du résultat d'analyse reçu.

3. Procédé selon la revendication 1 ou 2, dans lequel la durée D prédéterminée est déterminée de manière statistique de manière à ce que, pour un ensemble N de flux de données, au moins une fraction k prédéterminée des N flux de données est analysable par l'analyseur de flux en une durée d'analyse inférieure à D.

4. Procédé selon la revendication 2 ou selon les revendications 2 et 3, dans lequel l'étape de traitement du flux comprend les étapes suivantes :
- stocker dans une base de données (405) un marquage du flux de données, le marquage indiquant si le flux est autorisé ou interdit ;
et dans lequel, sur chaque interception d'un paquet de données, le procédé comprend en outre:
- identifier (202) le flux de données correspondant au paquet reçu ;
- si le paquet de données correspond à un flux autorisé, transférer le paquet de données au destinataire ;
- si le paquet de données correspond à un flux interdit, bloquer le paquet de données.

5. Produit programme informatique comportant des instructions pour la mise en œuvre du procédé selon l'une des revendications 1 à 4, lorsque ce programme est exécuté par un processeur.

6. Dispositif de traitement d'un flux de données échangé entre un client et une entité (15 ; 16) via un réseau de télécommunications (14), le flux de données comprenant un ensemble de paquets de données, le dispositif de traitement (12) comprenant :
- une interface d'entrée (401) pour intercepter un paquet de données appartenant à un flux de données ;
- une interface de sortie (406) ;
- un processeur (403) configuré pour, sur interception un paquet de données appartenant à un flux de données, ledit flux de données comprenant une source et un destinataire, ledit client étant la source ou le destinataire du flux de données, copier ledit paquet de données ou générer une référence audit paquet de données, et pour transférer le paquet de données au destinataire via l'interface de sortie;
dans lequel l'interface de sortie est en outre agencée pour transmettre ladite copie ou référence à un analyseur de flux apte à analyser le flux de données; dans lequel l'interface d'entrée est en outre agencée pour recevoir un résultat d'analyse du flux de données depuis l'analyseur de flux ;
dans lequel le processeur est en outre agencé pour traiter le flux de données sur la base du résultat d'analyse reçu ;
ledit dispositif étant **caractérisé en ce que** le processeur est apte à temporiser d'une durée D prédéterminée suite à la copie du paquet de données ou à la génération de la référence, et à transférer le paquet de données au destinataire à l'expiration de la temporisation, uniquement :
- si le résultat d'analyse de flux a été reçu de l'analyseur de flux et le flux de données est autorisé ; ou
- si le résultat d'analyse de flux n'a pas encore été reçu de l'analyseur de flux..

7. Système de traitement de flux comprenant un dispositif de traitement (12) selon la revendication 6 et un analyseur de flux (13) apte à, à partir d'un ou plusieurs paquets de données d'un flux de données, obtenir un résultat d'analyse du flux de données.

## Patentansprüche

1. Verfahren zum Verarbeiten eines Datenflusses, der zwischen einem Client (10) und einer Entität (15; 16) über ein Telekommunikationsnetz (14) ausgetauscht wird, wobei der Datenfluss eine Gruppe von Datenpaketen umfasst, wobei das Verarbeitungsverfahren die folgenden Schritte umfasst:
- beim Abfangen (201) eines Datenpakets, das zu einem Datenfluss gehört, wobei der Datenfluss eine Quelle und einen Empfänger umfasst, wobei der Client die Quelle oder das Ziel des Datenflusses ist, Kopieren (204) des Datenpakets oder Erzeugen einer Referenz auf das Datenpaket und Übertragen (205) des Datenpakets zum Empfänger;
- Übertragen der Kopie oder der Referenz zu einer Datenflussanalysevorrichtung, die in der Lage ist, den Datenfluss zu analysieren;
- Empfangen (206) eines Analyseergebnisses des Datenflusses von der Datenflussanalysevorrichtung;
- Verarbeiten (207; 208) des Datenflusses auf der Grundlage des empfangenen Analyseergebnisses;
wobei das Verfahren **dadurch gekennzeichnet ist, dass** es ferner einen Zeitsteuerungsschritt (209) einer vorbestimmten Dauer D nach dem Kopieren des Datenpakets oder der Erzeugung der Referenz umfasst, und wobei das Datenpaket erst nach Ablauf der Zeitsteuerung an den Empfänger übertragen wird:
- wenn das Ergebnis der Datenflussanalyse von der Datenflussanalysevorrichtung empfangen wurde und der Datenfluss zulässig ist; oder
- wenn das Ergebnis der Datenflussanalyse noch nicht von der Datenflussanalysevorrichtung empfangen wurde.

2. Verfahren nach Anspruch 1, wobei die Verarbeitung des Datenflusses umfassen kann:
- Anwenden einer Servicequalitätsrichtlinie in Abhängigkeit von dem empfangenen Analyseergebnis; oder
- Zulassen oder Sperren des Datenflusses auf der Grundlage des empfangenen Analyseergebnisses.

3. Verfahren nach Anspruch 1 oder 2, wobei die vorbestimmte Zeit D statistisch so bestimmt wird, dass für eine Gruppe N von Datenflüssen mindestens ein vorbestimmter Bruchteil k der N Datenflüsse durch die Datenflussanalysevorrichtung in einer Analysezeit kleiner D analysierbar ist.

4. Verfahren nach Anspruch 2 oder nach den Ansprüchen 2 und 3, wobei der Schritt der Verarbeitung des Datenflusses die folgenden Schritte umfasst:
- Speichern einer Markierung des Datenflusses in einer Datenbank (405), wobei die Markierung anzeigt, ob der Datenfluss zulässig oder gesperrt ist;
und wobei bei jedem Abfangen eines Datenpakets das Verfahren ferner umfasst:
- Identifizieren (202) des Datenflusses, der dem empfangenen Paket entspricht;
- wenn das Datenpaket einem zulässigen Datenfluss entspricht, Übertragen des Datenpakets an den Empfänger;
- wenn das Datenpaket einem gesperrten Datenfluss entspricht, Blockieren des Datenpakets.

5. Computerprogrammprodukt, umfassend Anweisungen zur Ausführung des Verfahrens nach einem der Ansprüche 1 bis 4, wenn dieses Programm von einem Prozessor ausgeführt wird.

6. Vorrichtung zur Verarbeitung eines Datenflusses, der zwischen einem Client und einer Entität (15; 16) über ein Telekommunikationsnetz (14) ausgetauscht wird, wobei der Datenfluss eine Gruppe von Datenpaketen umfasst, wobei die Verarbeitungsvorrichtung (12) umfasst:
- eine Eingangsschnittstelle (401) zum Abfangen eines zu einem Datenfluss gehörenden Datenpakets;
- eine Ausgangsschnittstelle (406);
- einen Prozessor (403), der derart konfiguriert ist, dass er beim Abfangen eines zu einem Datenfluss gehörenden Datenpakets, wobei der Datenfluss eine Quelle und einen Empfänger umfasst, wobei der Client die Quelle oder der Empfänger des Datenflusses ist, das Datenpaket kopiert oder eine Referenz auf das Datenpaket erzeugt und das Datenpaket über die Ausgangsschnittstelle an den Empfänger überträgt;
wobei die Ausgabeschnittstelle ferner dazu angeordnet ist, die Kopie oder die Referenz an eine Datenflussanalysevorrichtung zu übertragen, die in der Lage ist, den Datenfluss zu analysieren;
wobei die Eingangsschnittstelle ferner dazu angeordnet ist, ein Analyseergebnis des Datenflusses von der Datenflussanalysevorrichtung zu empfangen; wobei der Prozessor ferner dazu angeordnet ist, den Datenfluss auf der Grundlage des empfangenen Analyseergebnisses zu verarbeiten;
wobei die Vorrichtung **dadurch gekennzeichnet ist, dass** der Prozessor dazu ausgebildet ist, nach dem Kopieren des Datenpakets oder dem Erzeugen der Referenz um eine vorbestimmte Zeit D zu verzögern und das Datenpaket erst nach Ablauf der Verzögerung an den Empfänger zu übertragen:
- wenn das Ergebnis der Datenflussanalyse von der Datenflussanalysevorrichtung empfangen wurde und der Datenfluss zulässig ist; oder
- wenn das Ergebnis der Datenflussanalyse noch nicht von der Datenflussanalysevorrichtung empfangen wurde.

7. System zur Verarbeitung eines Datenflusses, umfassend eine Verarbeitungsvorrichtung (12) nach Anspruch 6 und eine Datenflussanalysevorrichtung (13), die dazu geeignet ist, ausgehend von einem oder mehreren Datenpaketen eines Datenflusses ein Analyseergebnis des Datenflusses zu erhalten.

## Claims

1. A method for processing a data stream exchanged between a client (10) and an entity (15; 16) via a telecommunications network (14), the data stream comprising a set of data packets, the processing method comprising the following steps:
- on interception (201) of a data packet belonging to a data stream, said data stream comprising a source and a recipient, said client being the source or the recipient of the data stream, copying (204) said data packet or generating a reference to said data packet, and transferring (205) the data packet to the recipient;
- transmitting said copy or reference to a stream analyzer able to analyze the data stream;
- receiving (206) a result of analysis of the data stream from the stream analyzer;
- processing (207; 208) the data stream on the basis of the analysis result received;
said method being **characterized in that** it comprises furthermore a time delay step (209) of a predetermined duration D subsequent to the copying of the data packet or to the generating of the reference, and in which the data packet is transferred to the recipient on expiry of the time delay, only:
- if the stream analysis result has been received from the stream analyzer and the data stream is authorized; or
- if the stream analysis result has not yet been received from the stream analyzer.

2. The method as claimed in claim 1, in which processing the data stream can comprise:
- applying a quality-of-service policy depending on the analysis result received; or
- authorizing or prohibiting the data stream on the basis of the analysis result received.

3. The method as claimed in claim 1 or 2, in which the predetermined duration D is determined in a statistical manner in such a way that, for a set N of data streams, at least one predetermined fraction k of the N data streams is analyzable by the stream analyzer in an analysis duration of less than D.

4. The method as claimed in claim 2 or as claimed in claims 2 and 3, in which the step of processing the stream comprises the following steps:
- storing in a database (405) a marking of the data stream, the marking indicating whether the stream is authorized or prohibited;
and in which, on each interception of a data packet, the method furthermore comprises:
- identifying (202) the data stream corresponding to the packet received;
- transferring the data packet to the recipient if the data packet corresponds to an authorized stream;
- blocking the data packet if the data packet corresponds to a prohibited stream.

5. A computer program product comprising instructions for the implementation of the method as claimed in one of claims 1 to 4, when this program is executed by a processor.

6. A device for processing a data stream exchanged between a client and an entity (15; 16) via a telecommunications network (14), the data stream comprising a set of data packets, the processing device (12) comprising:
- an input interface (401) for intercepting a data packet belonging to a data stream;
- an output interface (406);
- a processor (403) configured to, on interception of a data packet belonging to a data stream, said data stream comprising a source and a recipient, said client being the source or the recipient of the data stream, copy said data packet or generate a reference to said data packet, and to transfer the data packet to the recipient via the output interface;
in which the output interface is furthermore designed to transmit said copy or reference to a stream analyzer able to analyze the data stream;
in which the input interface is furthermore designed to receive a result of analysis of the data stream from the stream analyzer;
in which the processor is furthermore designed to process the data stream on the basis of the analysis result received;
said device being **characterized in that** the processor is able to time delay for a predetermined duration D subsequent to the copying of the data packet or to the generating of the reference, and to transfer the data packet to the recipient on expiry of the time delay, only:
- if the stream analysis result has been received from the stream analyzer and the data stream is authorized; or
- if the stream analysis result has not yet been received from the stream analyzer.

7. A stream processing system comprising a processing device (12) as claimed in claim 6 and a stream analyzer (13) able to, on the basis of one or more data packets of a data stream, obtain a result of analysis of the data stream.
